# EUROPÄISCHE PATENTSCHRIFT

(11) **EP 2 098 930 B1**
(45) Veröffentlichungstag und Bekanntmachung des Hinweises auf die Patenterteilung: **23.06.2010**
(21) Anmeldenummer: 08102236.0
(22) Anmeldetag: 04.03.2008
(51) Int. Cl.: G05B 19/4062, G05B 23/02, H02P 6/16, H02K 29/06, G05B 19/39, G01D 5/244

(54) **Überwachungssystem für einen Antrieb**
Monitoring system for a drive unit
Système de surveillance pour un dispositif d'entraînement

(43) Veröffentlichungstag der Anmeldung: 09.09.2009
(73) Patentinhaber: SICK AG, 79183 Waldkirch (DE)
(72) Erfinder: Moddemann, Jörg, 79350 Sexau (DE); Siraky, Josef, 78166 Donaueschingen (DE)
(74) Vertreter: Hehl, Ulrich

(56) Entgegenhaltungen:
- EP-A- 0 800 059
- DE-A1- 10 344 090
- DE-C1- 19 513 692
- SICK-STEGMANN: "HIPERFACE-Beschreibung. Description of the HIPERFACE Interface" INTERNET CITATION, [Online] März 2005 (2005-03), XP007905326 Gefunden im Internet: URL:http://www.stegmann.com/product/servo/ datasheets/1045.pdf> [gefunden am 2008-07-30]

## Beschreibung

Die Erfindung betrifft eine Überwachungseinheit und ein Überwachungsverfahren für ein Antriebssystem nach dem Oberbegriff von Anspruch 1 beziehungsweise 11 sowie eine Verwendung der Überwachungseinheit zur Umrüstung eines Antriebssystems.

Zur Überwachung verschiedener Antriebsdaten, wie Geschwindigkeit, Drehzahl, Drehwinkel eines Motors oder dergleichen, werden häufig Drehgeber eingesetzt. Dabei werden absolute und inkrementale Drehgeber unterschieden, welche also eine Absolutposition oder nur den Unterschied zu einer früheren Position ausgeben können. Bekannt ist, die beiden Prinzipien miteinander zu verbinden und die relativ aufwändige Bestimmung der Absolutposition nur in größeren Zeitabständen vorzunehmen, während in den Zwischenintervallen das inkrementale Signal zur Aktualisierung herangezogen wird.

Die Antriebssteuerung, welche den Motor startet, anhält, dessen Leistungsaufnahme regelt oder dergleichen, empfängt Prozessdaten des Drehgebers als sogenanntes Motorfeedback, also Daten über Geschwindigkeit, Position oder die Winkelstellung des Motors, über einen Prozesskanal. Ein zusätzlich zu dem Prozesskanal vorgesehener Parameterkanal erlaubt den Austausch von Steuerungsdaten, Diagnosedaten oder Parametern zwischen Antriebssteuerung und Drehgeber.

Ein Schnittstellenstandard, welcher Prozesskanal und Parameterkanal spezifiziert, ist Hiperface, welches im Stand der Technik beschrieben ist und auf das hier zu Details der Spezifikation verwiesen werden soll. Die Aufteilung in einen Prozesskanal und einen Parameterkanal ist auch aus Feldbusprotokollen wie Profibus oder CAN bekannt.

Herkömmliche Antriebssteuerungen und Motorfeedbacksysteme der beschriebenen Art sind nicht fehlersicher im Sinne einschlägiger Sicherheitsnormen und daher für den Einsatz in der Sicherheitstechnik nicht ohne Weiteres geeignet. Um die Sicherheit zu erreichen, wäre es denkbar, eine Überwachungseinheit an die Antriebssteuerung anzuschließen, welche erforderliche sichere Auswertungen vornehmen kann, um die korrekte Funktion des Drehgebers sicherzustellen. Dies erfordert aber eine eigene Schnittstelle und separate Kommunikationspfade zwischen Antriebssteuerung und Überwachungseinheit, beispielsweise digitale Signalleitungen oder serielle Bussysteme, und somit hohen zusätzlichen apparativen Aufwand für Hardware und Installation der Schnittstelle und Verbindungsmedien, was eine sichere Ausgestaltung eines Antriebssystems aufwändig macht.

Aus der DE 103 44 090 A1 ist eine Positionsmesseinrichtung bekannt, der eine Folgeelektronik Messdatenanforderungsbefehle schicken und die umgekehrt Messdaten von der Positionsmesseinrichtung empfangen kann Dabei ist eine zusätzliche Einheit vorgesehen, welche die Messdatenanforderungsbefehle auf einem separaten Datenkanal zur schnelleren Weiterleitung und Verarbeitung an der internen Kommunikationseinheit der Positionsmesseinrichtung vorbeischleusen kann.

Die EP 0 800 059 A1 zeigt ein Verfahren zur Übertragung von Informationen in einer Positionsmesseinrichtung, bei der zusätzlich zu digitalisierten Abtastsignalen auf Signal-Übertragungsleitungen auch Diagnosedaten über eine Versorgungsleitung übertragen werden. Die Diagnose bezieht sich dabei auf die Qualität der Sensordaten, also beispielsweise richtige Montage, Signalamplitude, oder die Einhaltung vorgegebener Grenzwerte.

In der DE 195 13 692 C1 ist ein Drehwinkelmesssystem offenbart, welches einen Prozessdatenkanal und einen Parameterkanal aufweist. Dabei kann über den Parameterkanal gesteuert werden, ob alternativ Daten einer feinen oder einer groben Codespur über den Prozesskanal übertragen werden. Zudem kann eine weitere Codespur mit nur einer Indexmarke an einer vorgegebenen Winkelposition über eine Multiplexeinheit und den Parameterkanal abgefragt werden.

Daher ist Aufgabe der Erfindung, ein herkömmliches Antriebssystem der beschriebenen Art sicher auszugestalten.

Diese Aufgabe wird durch eine Überwachungseinheit gemäß Anspruch 1, ein Überwachungsverfahren gemäß Anspruch 11 und eine Verwendung der erfindungsgemäßen Überwachungseinheit zur Umrüstung gemäß Anspruch 14 gelöst. Dabei geht die erfindungsgemäße Lösung von dem Prinzip aus, vorhandene Kommunikationsverbindungen auch für die Überwachung und fehlersichere Ausgestaltung der Antriebssteuerung zu verwenden.

Mit der mehrfachen Ausnutzung existierender Kommunikationsinfrastruktur entsteht eine besonders robuste und einfache Lösung, welche die Antriebssteuerung sicher macht und zugleich den Zusatzaufwand an Hardware und bei der Installation besonders gering hält.

Die Sensoreinheit weist bevorzugt einen Geschwindigkeitssensor, einen Positionsgeber oder einen Winkelgeber, insbesondere einen inkrementalen und/oder absoluten Drehgeber auf. Derartige Sensoren eignen sich gut zur Überwachung eines Antriebs und insbesondere der Drehzahl- oder Stellungsüberwachung bei einem Motor.

Die Überwachungseinheit ist als Zwischenstecker ausgebildet oder weist einen Zwischenstecker auf, welcher an einem Anschluss der Antriebssteuerung und/oder einem Anschluss der Sensoreinheit für Parameterkanal und Prozesskanal eingesteckt werden kann, um den Parameterkanal und den Prozesskanal nach Art eines T-Steckers für die Überwachungseinheit abzugreifen. In bevorzugter Weiterbildung bilden der Überwachungsdatenanschluss und der Prozessdatenanschluss eine getrennte oder eine gemeinsame Schnittstelle. Damit kann die Überwachungseinheit auf einfachste Weise in ein bestehendes System integriert werden, indem lediglich die Verbindung zur Schnittstelle mit Parameterkanal und Prozesskanal gelöst und unter Einbeziehung des Zwischensteckers wieder geschlossen wird. Ist die Überwachungseinheit klein genug, um in dem Zwischenstecker untergebracht werden zu können, so ist durch Aufstecken des Zwischensteckers die Antriebssteuerung mit einer Art modularem Aufsatz auf ihre Kommunikationsschnittstelle zu dem Motorfeedbacksystem beziehungsweise zu der Sensoreinheit um die Überwachungsfunktionalität erweitert. Dabei können für den Überwachungsdatenanschluss und den Prozessdatenanschluss bei Bedarf zwei getrennte, bevorzugt aber eine gemeinsame Schnittstelle in dem Zwischenstecker vorgesehen sein.

Vorteilhafterweise weist die Überwachungseinheit eine Überwachungssteuerung auf, welche für die Auswertung der Steuerungsdaten und/oder der Prozessdaten ausgebildet ist, um festzustellen, ob ein sicherheitsrelevanter Zustand des Antriebs und/öder der Sensoreinheit vorliegt, und die Überwachungssteuerung ist dafür ausgebildet, bei Vorliegen eines sicherheitsrelevanten Zustands ein Abschaltsignal insbesondere zum Anhalten, aktiven Bremsen oder Verringern der Leistung des Antriebs an die Antriebssteuerung auszugeben. Damit enthält die Überwachungseinheit diejenige wesentliche Funktionalität, welche aus einem Antriebssystem ein sicheres Antriebssystem und/oder aus der Sensoreinheit eine sichere Sensoreinheit macht. Gefährdungen oder Fehlfunktionen durch falsche oder ausfallende Sensordaten kann die Antriebssteuerung durch die genannten Maßnahmen entgegenwirken.

Der Überwachungsdatenanschluss und der Prozessdatenanschluss bildet bevorzugt eine Drehgeberschnittstelle, insbesondere nach dem Hiperface-Standard, wobei der Parameterkanal digital und bidirektional und der Prozesskanal analog und unidirektional nur in Senderichtung der Sensoreinheit ausgebildet ist. Durch eine derartige standardisierte Schnittstelle kann die Überwachungseinheit an eine große Zahl bestehender Antriebssteuerungen und üblicher Sensoren für Motorfeedbacksysteme angebunden werden, so dass sich ohne weitere Anpassungen ein großes Anwendungsgebiet erschließt.

Die Antriebssteuerung und/oder die Überwachungssteuerung sind vorteilhafterweise dafür ausgebildet, eine Umschaltung, ob der Parameterkanal zur Kommunikation zwischen Antriebssteuerung und Sensoreinheit oder zur Kommunikation zwischen Antriebssteuerung und Überwachungseinheit genutzt wird, durch eigene Befehle oder Codes zur Zuordnung, einen festen zeitlichen Ablauf, Kommunikationsprotokolle, die jeweils für den nicht angesprochenen Teilnehmer unverständlich sind, und/oder dadurch vorzunehmen, dass die Überwachungseinheit mit der Antriebssteuerung nur in Zeitintervallen kommuniziert, in denen insbesondere in einer Anlaufphase des Antriebs kein Datenaustausch zwischen Antriebssteuerung und Sensoreinheit stattfindet. Mit jeder dieser Ausgestaltungen kann der Parameterkanal seine üblichen Aufgaben zur Datenkommunikation zwischen Antriebssteuerung und Sensoreinheit unverändert erfüllen, zugleich aber auch den Kommunikationspfad zwischen Sensoreinheit und Überwachungssteuerung bilden. Gegenseitige Störungen der Kommunikation werden durch diese Ausgestaltungen verhindert.

In einer vorteilhaften Weiterbildung ist die Überwachungseinheit fehlersicher ausgelegt, insbesondere durch Selbsttests oder zweikanalige Auswertungen der Überwachungssteuerung, durch Tests des Datenaustauschs über den Parameterkanal und/oder Tests, ob der Prozesskanal Daten liefert. Die Überwachungseinheit bietet damit alle Voraussetzungen, in sicheren Antriebssystemen eingesetzt zu werden, welche geforderten Sicherheitskategorien oder Sicherheitsanforderungen genügt.

Ein Antriebssystem mit einer erfindungsgemäßen Ausführungsform der Überwachungseinheit ist bevorzugt durch redundante oder sich selbst überprüfende Prozesskanäle und Parameterkanäle, durch eine fehlersichere Sensoreinheit, welche insbesondere selbsttestend, selbstkorrigierend, zweikanalig, redundant oder diversitär-redundant ausgebildet ist, durch sichere, insbesondere zweikanalige Anschlüsse der Überwachungseinheit und/oder durch eine sichere Weiterleitung eines Abschaltsignals an den Antrieb mittels der Antriebssteuerung fehlersicher ausgelegt. Durch diese Maßnahmen wird mittels der erfindungsgemäßen Überwachungseinheit ein Antriebssystem fehlersicher, kann also auch in sicherheitskritischen oder sonst besondere Zuverlässigkeit verlangenden Anwendungen eingesetzt werden.

Das erfindungsgemäße Überwachungsverfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Abbildung der Zeichnung zeigt in:

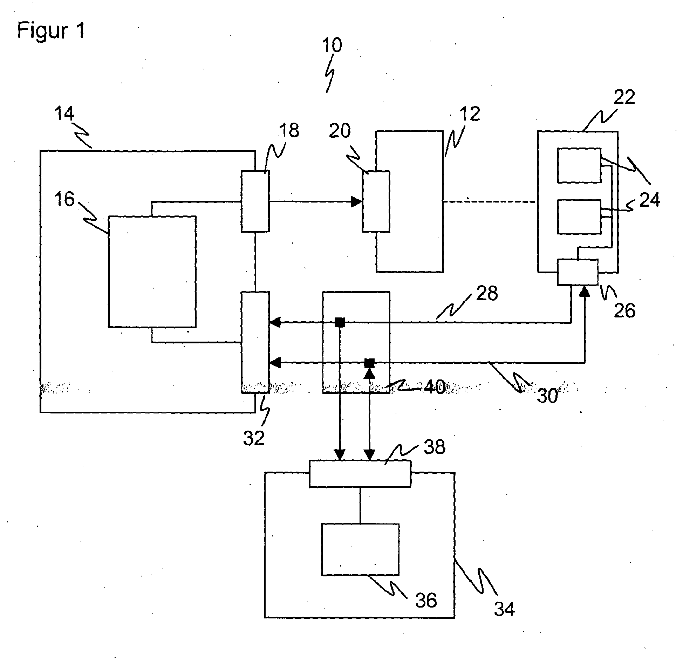

- Fig. 1: ein schematisches Blockschaltbild einer Ausführungsform eines erfindungsgemäßen Antriebssystems mit einer in Prozesskanal und Parameterkanal eingefügten Überwachungseinheit.

In Figur 1 ist ein schematisches Blockschaltbild eines erfindungsgemäßen Antriebssystems 10 dargestellt. Ein Antrieb 12 wird von einer Antriebssteuerung 14 gesteuert, deren eigentliche Ansteuerungslogik 16 über eine Antriebsschnittstelle 18 der Antriebssteuerung 14 an den Antrieb 12 über eine entsprechende Antriebsschnittelle 20 des Antriebs 12 Steuerbefehle übermitteln kann, etwa zum Einschalten, Ausschalten oder einer Änderung der Leistungsaufnahme. Der Antrieb 12 kann ein Elektromotor oder ein anderer Motor einer beliebigen angetriebenen Vorrichtung, wie eines Fahrzeugs, einer Werkzeugmaschine oder einer Seilwinde sein.

Damit die Antriebssteuerung 14 Rückmeldungen über den Zustand des Antriebs 12 erhalten kann, ist eine Sensoreinheit 22 vorgesehen, welche den Antrieb 12 überwachen kann, wie dies durch eine gestrichelte Linie zwischen Antrieb 12 und Sensoreinheit 22 dargestellt ist. Die Sensoreinheit kann einen oder mehrere Sensoren 24 jeder geeigneten Art für die Gewinnung von Überwachungsinformationen über den Antrieb 12 aufweisen. In den meisten Fällen werden dafür Geschwindigkeitssensoren, Positionsgeber oder Drehgeber eingesetzt. Zwei Sensoren 24 desselben Typs können eingesetzt werden, um auch noch bei Ausfall eines Sensors Messdaten zu erhalten oder die Messdaten zu vergleichen und somit höhere Sicherheit gegenüber Fehlern zu gewährleisten.

Die Sensoreinheit 22 umfasst eine Schnittstelle 26 für den Anschluss eines Prozesskanals 28 und eines Parameterkanals 30. Diese beiden Kanäle verbinden die Sensoreinheit 22 mittels einer entsprechenden Schnittstelle 32 der Antriebssteuerung 14 mit der Ansteuerungslogik 16.

Die beiden Schnittstellen 26, 32 sind in vielen Anwendungen standardisierte Drehgeberschnittstellen etwa nach dem Hiperface-Standard. Obwohl die Erfindung bevorzugt mit derartigen Schnittstellen eingesetzt wird, ist sie darauf nicht beschränkt, und es ist auch entgegen der Darstellung der Figur 1 möglich, dass Prozesskanal 28 und Parameterkanal 30 jeweils über eigene Schnittstellen die Sensoreinheit 22 mit der Antriebssteuerung 14 verbinden. Ebenso können Prozesskanal und Parameterkanal über eine gemeinsame Schnittstelle und eine Busleitung übertragen werden, wobei Prozess- und Parameterinformationen als Übertragungsdienste einer gemeinsamen Buskommunikation vorgesehen sind.

Der Prozesskanal 28 ist unidirektional, wie durch die Pfeilspitze angedeutet, und überträgt Prozessdaten von der Sensoreinheit 22 zu der Antriebssteuerung 14. Dabei handelt es sich also vor allem um Sensordaten, welche Geschwindigkeiten, Positionen, Drehzahlen oder Winkelstellungen des Antriebs 12 entsprechen. Obwohl es möglich ist, diese Prozessdaten digital, drahtlos und in jeder beliebigen anderen denkbaren Weise zu übertragen, wird in der Praxis meist eine analoge Verbindung eingesetzt.

Der Parameterkanal 30 dagegen ist bidirektional, wie ebenfalls durch Pfeilspitzen angedeutet, und für die Übermittlung von hier und im Folgenden gemeinsam unter dem Begriff Steuerbefehl zusammengefassten Parametern, eigentlichen Steuerbefehlen oder Diagnosedaten vorgesehen. Auch hier ist grundsätzlich jeder Kommunikationsstandard denkbar, bevorzugt ist aber eine digitale, serielle RS485-Verbindung.

Eine Überwachungseinheit 34 mit einer Überwachungssteuerung 36 ist mit ihrer Überwachungsdatenschnittstelle 38 an den Prozesskanal 28 und den Parameterkanal 30 angeschlossen. Die Prozessdaten des Prozesskanal 28 werden somit sowohl an die Antriebssteuerung 14 wie auch an die Überwachungssteuerung 36 übertragen. Über diese Überwachungsdatenschnittstelle 38 kann die Überwachungssteuerung 36 auch mittels des Parameterkanals 20 mit der Sensoreinheit 26 und/oder der Antriebssteuerung 14 kommunizieren.

Die Überwachungssteuerung 36 ist dafür ausgebildet, aus Prozessdaten des Prozesskanals 28 oder aus Diagnosendaten des Parameterkanals 30 kritische Zustände des Antriebs 12 und der Sensoreinheit 22 zu erkennen. In diesem Fall gibt die Überwachungssteuerung 36 über den Parameterkanal 30 ein Abschaltsignal an die Antriebssteuerung 14 aus, welche den Antrieb 12 in einen der Situation angemessenen Zustand versetzt. Dies kann ein einfaches Deaktivieren, eine Drosselung der Leistungsaufnahme, aber auch ein aktives Bremsen hin zu langsameren Geschwindigkeiten oder zu einem sofortigen Stillstand sein, je nachdem, welche kritischen Situationen auftreten können. Ein heiß gelaufener Motor erfordert gewöhnlich weniger drastische Maßnahmen als eine möglicherweise nicht mehr intakte Seilwinde, unter deren Last sich Personen aufhalten könnten.

Die Übertragungsdatenschnittstelle 38 ist im Grunde gleich ausgebildet wie die Schnittstelle 26 der Sensoreinheit 22 und die Schnittstelle 32 der Antriebssteuerung 14. Ihre Anbindung erfolgt über ein Verbindungsstück 40, welches den Prozesskanal 28 und den Parameterkanal 30 in einer T-Abzweigung aufteilt. Das Verbindungsstück 40 kann als Stecker ausgebildet sein, welcher auf die Schnittstelle 32 oder die Schnittstelle 26 aufgesetzt wird. Ist die Überwachungssteuerung 36 sehr klein ausgebildet, etwa als FPGA oder ein ähnlicher Logikbaustein, so kann sie in diesen Stecker integriert sein, und die Überwachungseinheit 34 wird dann einfach modulartig auf die Antriebssteuerung 14 oder die Sensoreinheit 22 aufgesteckt.

Damit das Antriebssystem 10 sicher wird, können verschiedene Maßnahmen zur Erreichung der Fehlersicherheit seiner Komponenten ergriffen werden. Dazu zählen Selbsttests, mehrfache Auswertungs- oder Kommunikationspfade, welche sowohl in Hardware als auch in Software erfolgen können, zweikanalige Anschlüsse und Schnittstellen und ähnliche Maßnahmen. Die zu erfüllenden Sicherheitsanforderungen für eine Sicherheitskategorie sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Das Zwischenschalten der Überwachungseinheit 34 stört die Kommunikation des Prozesskanal 28 nicht, da dieser ohnehin nur in einer Richtung Daten überträgt und die Überwachungssteuerung 36 lediglich zusätzlich zu der Antriebssteuerung 14 auf diesem Prozesskanal 28 lauscht.

Den bidirektionalen Parameterkanal 30 muss sich die Überwachungssteuerung 36 mit der Antriebssteuerung 14 teilen. Die Antriebssteuerung 14 benötigt den Parameterkanal 30 in erster Linie in einer Anlaufphase des Antriebs 12, so dass schon kurz nach dem Einschalten der Parameterkanal mehr oder weniger unbenutzt ist und der Überwachungssteuerung 36 zur Verfügung steht. Alternativ zu einer Nutzung solcher Totzeiten können aber auch der Antriebssteuerung 14 und der Überwachungssteuerung 36 jeweils festgelegte Zeitschlitze für ihre Kommunikation verfügbar gemacht werden. Schließlich können auch Antriebssteuerung 14 und Überwachungssteuerung 36 unterschiedliche Kommunikationsprotokolle verwenden, welche auf anderen Takten oder Datenbreiten basieren, so dass sie für den jeweils nicht angesprochenen Teilnehmer unverständlich sind und ignoriert werden. Mit solchen Maßnahmen wird der Parameterkanal 30 beiden Funktionen als Verbindung zwischen Sensoreinheit 22 und Antriebssteuerung 14 einerseits und als Verbindung zwischen Überwachungseinheit 34 und Anschlusssteuerung 14 andererseits ohne merkliche Einbußen gerecht.

Theoretisch wäre alternativ zu einer eigenen Überwachungseinheit 34 auch denkbar, die Überwachungsfunktionalität in die Antriebssteuerung 14 zu integrieren. In der Praxis sollen aber vorhandene Antriebssteuerungen eingesetzt und bei der Umrüstung auf sichere Sensoreinheiten 22 nur insoweit auf Softwareebene verändert werden, dass sie Abschaltsignale der Überwachungseinheit 34 verarbeiten und an den Antrieb 12 weitergeben können. Die separate Überwachungseinheit 34 kann getrennt im Hinblick auf ihre Fehlersicherheit zertifiziert werden, und dieser mühsame Zertifizierungsprozess muss nicht für jede Anlagensteuerung 14 wiederholt werden.

Um sichere Daten über den Antrieb 12 zu erhalten, können wie beschrieben mehrere Sensoren 24 in der Sensoreinheit 22 eingesetzt werden. Alternativ sind aber auch anstelle eines zweiten Sensors 24 andere zweite Datenquellen zur Plausibilisierung denkbar, etwa aus der Antriebssteuerung 14. Die Prozessdaten zur Plausibilisierung können dann ebenfalls über den Parameterkanal von der Antriebssteuerung an die Überwachungseinheit übertragen werden. Mittels der Erfindung kann also der Parameterkanal eine zweifache zusätzliche Funktion einerseits für Steuerinformationen der Überwachungseinheit zur Antriebssteuerung und andererseits für Plausibilisierungsdaten von der Antriebssteuerung an die Überwachungseinheit erfüllen.

Erfindungsgemäß kann also die Fehlersicherheit des Motorfeedbacks mit einem minimalen Zusatzaufwand unter Ausnutzung der vorhandenen Kommunikationsstruktur und Schnittstellen gewährleistet werden. Es ist möglich, den Prozesskanal 28 oder den Parameterkanal 30 auf die Adressierung von mindestens drei Teilnehmern zu erweitern und für den Datenaustausch zu verwenden. Dies ist aber eine vergleichsweise aufwändige Umrüstung, um die Überwachungseinheit 34 einzubinden.

## Patentansprüche

1. Überwachungseinheit (34) für ein Antriebssystem (10), welches eine Antriebssteuerung (14) eines Antriebs (12) und eine über einen Prozesskanal (28) für Prozessdaten und einen Parameterkanal (30) für Steuerungsdaten mit der Antriebssteuerung (14) verbundene Sensoreinheit (22) des Antriebs (12) umfasst,
wobei die Überwachungseinheit (34) zum Datenaustausch einen Überwachungsdatenanschluss (38) für die Antriebssteuerung (14) sowie zum Empfang von Prozessdaten der Sensoreinheit (22) einen Prozessdatenanschluss (38) an den Prozesskanal (28) aufweist,
und wobei der Überwachungsdatenanschluss (38) dafür ausgebildet ist, die Überwachungseinheit (34) über den Parameterkanal (30) mit der Antriebssteuerung (14) zu verbinden,
**dadurch gekennzeichnet,**
**dass** die Überwachungseinheit (34) einen Zwischenstecker (40) aufweist oder als Zwischenstecker (34, 40) ausgebildet ist, welcher an einem Anschluss (32) der Antriebssteuerung und/oder einem Anschluss (26) der Sensoreinheit (22) für Parameterkanal (30) und Prozesskanal (28) eingesteckt werden kann, um den Parameterkanal (30) und den Prozesskanal (28) nach Art eines T-Steckers für die Überwachungseinheit (34) abzugreifen,
**dass** die Überwachungseinheit (34) eine Überwachungssteuerung (36) aufweist, welche für die Auswertung der Steuerungsdaten und/oder der Prozessdaten ausgebildet ist, um festzustellen, ob ein sicherheitsrelevanter Zustand des Antriebs (12) und/oder der Sensoreinheit (22) vorliegt
und **dass** die Überwachungssteuerung (36) dafür ausgebildet ist, bei Vorliegen eines sicherheitsrelevanten Zustands ein Abschaltsignal an die Antriebssteuerung (14) auszugeben.

2. Überwachungseinheit (34) nach Anspruch 1,
wobei die Sensoreinheit (22) einen Geschwindigkeitssensor, einen Positionsgeber oder einen Winkelgeber aufweist, insbesondere einen inkrementalen und/oder absoluten Drehgeber (24).

3. Überwachungseinheit (34) nach Anspruch 1 oder 2,
wobei der Überwachungsdatenanschluss und der Prozessdatenanschluss eine getrennte oder gemeinsame Schnittstelle (38) bilden.

4. Überwachungseinheit (34) nach einem der vorhergehenden Ansprüche, wobei die Überwachungssteuerung (36) dafür ausgebildet ist, bei Vorliegen eines sicherheitsrelevanten Zustands das Abschaltsignal zum Anhalten, aktiven Bremsen oder Verringern der Leistung des Antriebs (12) an die Antriebssteuerung (14) auszugeben.

5. Überwachungseinheit (34) nach einem der vorhergehenden Ansprüche, wobei der Überwachungsdatenanschluss und der Prozessdatenanschluss eine Drehgeberschnittstelle (38) bilden, insbesondere nach dem Hiperface-Standard

6. Überwachungseinheit (34) nach einem der vorhergehenden Ansprüche, wobei der Parameterkanal (30) digital und bidirektional und der Prozesskanal (28) analog und unidirektional nur in Senderichtung der Sensoreinheit (22) ausgebildet ist.

7. Überwachungseinheit (34) nach einem der vorhergehenden Ansprüche, wobei Antriebssteuerung (14) und/oder Überwachungssteuerung (36) dafür ausgebildet sind, eine Umschaltung, ob der Parameterkanal (30) zur Kommunikation zwischen Antriebssteuerung (14) und Sensoreinheit (22) oder zur Kommunikation zwischen Antriebssteuerung (14) und Überwachungseinheit (34) genutzt wird, durch eigene Befehle oder Codes zur Zuordnung, einen festen zeitlichen Ablauf, Kommunikationsprotokolle, die jeweils für den nicht angesprochenen Teilnehmer unverständlich sind, und/oder **dadurch** vorzunehmen, dass die Überwachungseinheit (34) mit der Antriebssteuerung (14) nur in Zeitintervallen kommuniziert, in denen insbesondere in einer Anlaufphase des Antriebs (12) kein Datenaustausch zwischen Antriebssteuerung (14) und Sensoreinheit (22) stattfindet.

8. Überwachungseinheit (34) nach einem der vorhergehenden Ansprüche, wobei die Überwachungseinheit (34) fehlersicher ausgelegt ist, insbesondere durch Selbsttests oder zweikanalige Auswertungen der Überwachungssteuerung (36), durch Tests des Datenaustauschs über den Parameterkanal (30) und/oder Tests, ob der Prozesskanal (28) Daten liefert.

9. Antriebssystem (10) mit einer Antriebssteuerung (14) eines Antriebs (12), einer über einen Prozesskanal (28) für Prozessdaten und einen Parameterkanal (30) für Steuerungsdaten mit der Antriebssteuerung (14) verbundenen Sensoreinheit (22) des Antriebs (12) und einer Überwachungseinheit (34) nach einem der Ansprüche 1 bis 8.

10. Antriebssystem (10) nach Anspruch 9,
welches fehlersicher ausgebildet ist, durch redundante oder sich selbst überprüfende Prozesskanäle (28) und Parameterkanäle (30), durch eine fehlersichere Sensoreinheit (22), welche insbesondere selbsttestend, selbstkorrigierend, zweikanalig, redundant oder diversitär-redundant ausgebildet ist, durch fehlersichere insbesondere zweikanalige Anschlüsse der Überwachungseinheit (34) und/oder durch eine fehlersichere Weiterleitung eines Abschaltsignals an den Antrieb (12) mittels der Antriebssteuerung (14).

11. Überwachungsverfahren für einen Antrieb (12) in einem Antriebssystem (10), welches eine Antriebssteuerung (14) und eine über einen Prozesskanal (28) für Prozessdaten und einen Parameterkanal (30) für Steuerungsdaten mit der Antriebssteuerung (14) verbundene Sensoreinheit (22) umfasst, wobei zwischen einer Überwachungseinheit (34) und der Antriebssteuerung (14) Daten ausgetauscht werden und die Überwachungseinheit (34) von der Sensoreinheit (22) Prozessdaten über den Prozesskanal (28) empfängt,
und wobei
die Daten zwischen der Antriebssteuerung (14) und der Überwachungseinheit (34) über den Parameterkanal (30) ausgetauscht werden,
**dadurch gekennzeichnet,**
**dass** die einen Zwischenstecker (40) aufweisende oder als Zwischenstecker (34, 40) ausgebildete Überwachungseinheit (34) an einem Anschluss (32) der Antriebssteuerung und/oder einem Anschluss (26) der Sensoreinheit (22) für Parameterkanal (30) und Prozesskanal (28) eingesteckt wird, um den Parameterkanal (30) und den Prozesskanal (28) nach Art eines T-Steckers für die Überwachungseinheit (34) abzugreifen,
**dass** in der Überwachungseinheit (34) anhand der Prozessdaten und/oder der Steuerungsdaten festgestellt wird, ob ein sicherheitsrelevanter Zustand des Antriebs (12) und/oder der Sensoreinheit (22) vorliegt,
und **dass** von der Überwachungseinheit (34) bei Vorliegen eines sicherheitsrelevanten Zustands ein Abschaltsignal an die Antriebssteuerung (14) ausgegeben wird.

12. Überwachungsverfahren nach Anspruch 11,
wobei von der Überwachungseinheit (34) bei Vorliegen eines sicherheitsrelevanten Zustands das Abschaltsignal zum Anhalten, aktiven Bremsen oder Verringern der Leistung des Antriebs (12) an die Antriebssteuerung (14) ausgegeben wird.

13. Überwachungsverfahren nach Anspruch 11 oder 12,
wobei eine Umschaltung, ob der Parameterkanal (30) zur Kommunikation zwischen Antriebssteuerung (14) und Sensoreinheit (22) oder zur Kommunikation zwischen Antriebssteuerung (14) und Überwachungseinheit (34) genutzt wird, durch eigene Befehle oder Codes zur Zuordnung, einen festen zeitlichen Ablauf. Kommunikationsprotokolle, die jeweils für den nicht angesprochenen Teilnehmer unverständlich sind, und/oder **dadurch** vorgenommen wird, dass die Überwachungseinheit (34) mit der Antriebssteuerung (14) nur in Zeitintervallen kommuniziert, in denen kein Datenaustausch zwischen Antriebssteuerung (14) und Sensoreinheit (12) stattfindet.

14. Verwendung einer Überwachungseinheit (34) nach einem der Ansprüche 1 bis 8 zur Umrüstung eines Antriebssystem (10) mit einer Antriebssteuerung (14) eines Antriebs (12) und einer über einen Prozesskanal (28) für Prozessdaten und einen Parameterkanal (30) für Steuerungsdaten mit der Antriebssteuerung (14) verbundenen Sensoreinheit (22) des Antriebs (12) in ein fehlersicheres Antriebssystem (10) mit einer fehlersicheren Sensoreinheit (22), insbesondere ein sicheres Antriebssystem (10) nach Anspruch 9 oder 10, wobei eine Überwachungseinheit (34) nach einem der Ansprüche 1 bis 8 zum Empfang von Prozessdaten der Sensoreinheit (22) an den Prozesskanal (28) und zum Datenaustausch mit der Antriebssteuerung (14) an den Parameterkanal (30) angeschlossen wird.

## Claims

1. A monitoring unit (34) for a drive system (10) which includes a drive controller (14) of a drive (12) and a sensor unit (22) of the drive (12), said sensor unit being connected to the drive controller (14) via a process channel (28) for process data and via a parameter channel (30) for control data,
wherein the monitoring unit (34) has a monitoring data connection (38) for the drive controller (14) for data exchange and a process data connection (38) to the process channel (28) for the reception of process data of the sensor unit (22),
and wherein the monitoring data connection (38) is designed to connect the monitoring unit (34) to the drive controller (14) via the parameter channel (30),
**characterised in that**
the monitoring unit (34) has an adapter plug (40) or is made as an adapter plug (34, 40) which can be plugged in at a connection (32) of the drive controller and/or at a connection (26) of the sensor unit (22) for the parameter channel (30) and for the process channel (28) to tap the parameter channel (30) and the process channel (28) in the manner of a T plug for the monitoring unit (34);
**in that** the monitoring unit (34) has a monitoring controller (36) which is designed for the evaluation of the control data and/or of the process data to determine whether a safety-relevant state of the drive (12) and/or of the sensor unit (22) is present;
and **in that** the monitoring controller (36) is designed to output a switch-off signal to the drive controller (14) on the presence of a safety-relevant state.

2. A monitoring unit (34) in accordance with claim 1, wherein the sensor unit (22) has a speed sensor, a position encoder or an angle encoder, in particular an incremental and/or absolute rotary encoder (24).

3. A monitoring unit (34) in accordance with claim 1 or claim 2, wherein the monitoring data connection and the process data connection form a separate interface (38) or a common interface (38).

4. A monitoring unit (34) in accordance with any one of the preceding claims, wherein the monitoring controller (36) is designed to output the switch-off signal to the drive controller (14) to stop, to actively brake or to reduce the power of the drive (12) on the presence of a safety-relevant state.

5. A monitoring unit (34) in accordance with any one of the preceding claims, wherein the monitoring data connection and the process data connection form a rotary encoder interface (38), in particular in accordance with the Hiperface standard.

6. A monitoring unit (34) in accordance with any one of the preceding claims, wherein the parameter channel (30) is made digital and bidirectional and the process channel (28) is made analogue and unidirectional only in the transmission direction of the sensor unit (22).

7. A monitoring unit (34) in accordance with any one of the preceding claims, wherein the drive controller (14) and/or the monitoring controller (36) are designed to carry out a switchover to determine whether the parameter channel (30) is used for the communication between the drive controller (14) and the sensor unit (22) or for the communication between the drive controller (14) and the monitoring unit (34) by separate commands or codes for the association, by a fixed time schedule, by communication protocols which are in each case not understandable for the non-addressed participant and/or such that the monitoring unit (34) only communicates with the drive controller (14) in time intervals in which no data exchange takes place between the drive controller (14) and the sensor unit (22), in particular in a start-up phase of the drive (12).

8. A monitoring unit (34) in accordance with any one of the preceding claims, wherein the monitoring unit (34) is designed as fail-safe, in particular by self-tests or by two-channel evaluations of the monitoring controller (36), by tests of the data exchange over the parameter channel (30) and/or tests whether the process channel (28) is delivering data.

9. A drive system (10) having a drive controller (14) of a drive (12), having a sensor unit (22) of the drive (12), said sensor unit being connected to the drive controller (14) via a process channel (28) for process data and via a parameter channel (30) for control data, and having a monitoring unit (34) in accordance with any one of the claims 1 to 8.

10. A drive system (10) in accordance with claim 9, which is made fail-safe by redundant or self-testing process channels (28) and by parameter channels (30), by a fail-safe sensor unit (22), which is in particular made self-testing, self-correcting, in two-channel form, redundant or diversely redundant, by fail-safe, in particular two-channel, connections of the monitoring unit (34) and/or by a fail-safe forwarding of a switch-off signal to the drive (12) by means of the drive controller (14).

11. A monitoring method for a drive (12) in a drive system (10) which includes a drive controller (14) and a sensor unit (22) connected to the drive controller (14) via a process channel (28) for process data and via a parameter channel (30) for control data, wherein data are exchanged between a monitoring unit (34) and the drive controller (14) and the monitoring unit (34) receives process data from the sensor unit (22) via the process channel (28);
and wherein
the data are exchanged between the drive controller (14) and the monitoring unit (34) via the parameter channel (30),
**characterised in that**
the monitoring unit (40) having an adapter plug (34) or made as an adapter plug (40, 34) is plugged in at a connection (32) of the drive controller and/or at a connection (26) of the sensor unit (22) for the parameter channel (30) and for the process channel (28) to tap the parameter channel (30) and the process channel (28) in the manner of a T plug for the monitoring unit (34);
**in that** a determination is made in the monitoring unit (34) with reference to the process data and/or to the control data whether a safety-relevant state of the drive (12) and/or of the sensor unit (22) is present;
and **in that** a switch-off signal is output to the drive controller (14) by the monitoring unit (34) on the presence of a safety-relevant state.

12. A monitoring method in accordance with claim 11, wherein the switch-off signal is output to the drive controller (14) by the monitoring unit (34) to stop, actively brake or reduce the power of the drive (12) on the presence of a safety-relevant state.

13. A monitoring method in accordance with claim 11 or claim 12 wherein a switchover to determine whether the parameter channel (30) is used for the communication between the drive controller (14) and the sensor unit (22) or for the communication between the drive controller (14) and the monitoring unit (34) is carried out by separate commands or codes for the association, by a fixed time schedule, by communication protocols which are in each case not understandable for the non-addressed participant and/or such that the monitoring unit (34) only communicates with the drive controller (14) in time intervals in which no data exchange takes place between the drive controller (14) and the sensor unit (12).

14. Use of a monitoring unit (34) in accordance with any one of the claims 1 to 8 for the retrofitting of a drive system (10) with a drive controller (14) of a drive (12) and with a sensor unit (22) of the drive (12), said sensor unit being connected to the drive controller (14) via a process channel (28) for process data and via a parameter channel (30) for control data, into a fail-safe drive system (10) having a fail-safe sensor unit (22), in particular a safe drive system (10) in accordance with claim 9 or claim 10, wherein a monitoring unit (34) in accordance with any one of the claims 1 to 8 is connected to the process channel (28) for the reception of process data of the sensor unit (22) and to the parameter channel (30) for data exchange with the drive controller (14).

## Revendications

1. Unité de surveillance (34) pour un système d'entraînement (10), qui comprend une commande d'entraînement (14) pour un entraînement (12) et une unité de détection (22), de l'entraînement (12), reliée à la commande d'entraînement (14) via un canal de process (28) pour des données de process et un canal de paramètres (30) pour des données de commande,
dans laquelle l'unité de surveillance (34) comprend, pour l'échange de données, un branchement de données de surveillance (38) pour la commande d'entraînement (14) ainsi qu'un branchement de données de process (38) pour la réception de données de process de l'unité de détection (22) au niveau du canal de process (28),
et dans laquelle le branchement de données de surveillance (38) est réalisé pour connecter l'unité de surveillance (34) avec la commande d'entraînement (14) via le canal de paramètres (30),
**caractérisée en ce que**
l'unité de surveillance (34) comprend une prise intermédiaire (40) ou est réalisée sous forme de prise intermédiaire (34, 40), laquelle peut être branchée à un branchement (32) de la commande d'entraînement et/ou à un branchement (26) de l'unité de détection (22) pour le canal de paramètres (30) et le canal de process (28), afin de faire une dérivation du canal de paramètres (30) et du canal de process (28) à la manière d'une prise en T, pour l'unité de surveillance (34),
**en ce que** l'unité de surveillance (34) comprend une commande de surveillance (36), qui est réalisée pour l'évaluation des données de commande et/ou des données de process, pour constater si un état critique en matière de sécurité se présente pour l'entraînement (12) et/ou pour l'unité de détection (22),
et **en ce que** la commande de surveillance (36) est réalisée pour délivrer à la commande d'entraînement (14) un signal de coupure lors de la présence d'un état critique en matière de sécurité.

2. Unité de surveillance (34) selon la revendication 1,
dans laquelle l'unité de détection (22) comprend un détecteur de vitesse, un détecteur de position, ou un détecteur d'angle, en particulier un détecteur rotatif incrémental et/ou absolu (24).

3. Unité de surveillance (34) selon la revendication 1 ou 2,
dans laquelle le branchement de données de surveillance et le branchement de données de process forment une interface séparée ou commune (38).

4. Unité de surveillance (34) selon l'une des revendications précédentes, dans laquelle la commande de surveillance (36) est réalisée pour délivrer à la commande d'entraînement (14), en présence d'un état critique en matière de sécurité, le signal de coupure, pour arrêter, freiner de manière active pour réduire la puissance de l'entraînement (12).

5. Unité de surveillance (34) selon l'une des revendications précédentes, dans laquelle le branchement de données de surveillance et le branchement de données de process forment une interface à capteur rotatif (38), en particulier selon le standard "Hiperface".

6. Unité de surveillance (34) selon l'une des revendications précédentes, dans laquelle le canal de paramètres (30) est réalisé sous forme numérique et bidirectionnel et le canal de process (28) est réalisé sous forme analogique et unidirectionnel, uniquement dans la direction d'émission de l'unité de détection (22).

7. Unité de surveillance (34) selon l'une des revendications précédentes, dans laquelle la commande d'entraînement (14) et/ou la commande de surveillance (36) sont réalisées pour exécuter une inversion, pour utiliser le canal de paramètres (30) pour la communication entre la commande d'entraînement (14) et l'unité de détection (22) ou pour la communication entre la commande d'entraînement (14) et l'unité de surveillance (34), au moyen d'ordres propres ou de codes d'association, d'un déroulement temporel fixe, de protocoles de communication qui ne sont pas compréhensibles pour le participant auquel ils ne sont pas destinés, et/ou du fait que l'unité de surveillance (34) communique avec la commande d'entraînement (14) uniquement dans des intervalles temporels dans lesquels, en particulier dans une phase de démarrage de l'entraînement (12), il ne se produit aucun échange de données entre la commande d'entraînement (14) et l'unité de détection (22).

8. Unité de surveillance (34) selon l'une des revendications précédentes, dans laquelle l'unité de surveillance (34) est conçue à l'épreuve des erreurs, en particulier au moyen d'autotests ou d'évaluation à deux canaux de la commande de surveillance (36), par des tests de l'échange de données via le canal de paramètres (30) et/ou de tests pour savoir si le canal de process (28) délivre des données.

9. Système d'entraînement (10) comprenant une commande d'entraînement (14) d'un entraînement (12), une unité de détection (22) de l'entraînement (12) reliée à la commande d'entraînement (14) via un canal de process (28) pour des données de process et un canal de paramètres (30) pour des données de commande, et une unité de surveillance (34) selon l'une des revendications 1 à 8.

10. Système d'entraînement (10) selon la revendication 9,
qui est réalisé à l'épreuve des erreurs, grâce à des canaux de process (28) et des canaux de paramètres (30) redondants ou se contrôlant eux-mêmes, grâce à unité de détection (22) à l'épreuve des erreurs, laquelle est en particulier réalisée de manière à exécuter des autotests, des autocorrections, à deux canaux, de manière redondante ou diversitaire-redondante, grâce à des branchements de l'unité de surveillance (34) à l'épreuve des erreurs, en particulier à deux canaux, et/ou grâce à une transmission à l'épreuve des erreurs d'un signal d'arrêt à l'entraînement (12) au moyen de la commande d'entraînement (14).

11. Procédé de surveillance pour un entraînement (12) dans un système d'entraînement (10) qui comprend une commande d'entraînement (14) et une unité de détection (22) reliée à la commande d'entraînement (14) via un canal de process (28) pour des données de process et via un canal de paramètres (30) pour des données de commande, dans lequel des données sont échangées entre une unité de surveillance (34) et la commande d'entraînement (14), et l'unité de surveillance (34) reçoit des données de process provenant de l'unité de détection (22) via le canal de process (28), et dans lequel
les données sont échangées entre la commande d'entraînement (14) et l'unité de surveillance (34) via le canal de paramètres (30),
**caractérisé en ce qu'**une unité de surveillance (34) qui comprend une prise intermédiaire (40) ou qui est réalisée comme prise intermédiaire (34, 40), est branchée à un branchement (32) de la commande d'entraînement et/ou à un branchement (26) pour l'unité de détection (22) pour le canal de paramètres (30) et pour le canal de process (28), pour faire une dérivation du canal de paramètres (30) et du canal de process (28) à la manière d'une prise en T pour l'unité de surveillance (34),
**en ce que** l'on constate dans l'unité de surveillance (34) au moyen des données de process et/ou des données de commande, si on est en présence d'un état critique en matière de sécurité de l'entraînement (12) et/ou de l'unité de détection (22),
et **en ce qu'**un signal de coupure est délivré à la commande d'entraînement (14) depuis l'unité de surveillance (34) en présence d'un état critique en matière de sécurité.

12. Procédé de surveillance selon la revendication 11,
dans lequel le signal de coupure est délivré à la commande d'entraînement (14) depuis l'unité de surveillance (34) en présence d'un état critique en matière de sécurité, pour arrêter, freiner de manière active ou réduire la puissance de l'entraînement (12).

13. Procédé de surveillance selon la revendication 11 ou 12,
dans lequel une inversion, pour utiliser le canal de paramètres (30) pour la communication entre la commande d'entraînement (14) et l'unité de détection (22) ou pour la communication entre la commande d'entraînement (14) et l'unité de surveillance (34), est exécutée grâce à des ordres propres ou à des codes d'association, grâce à un déroulement temporel fixe, à des protocoles de communication qui ne sont pas compréhensibles pour le participant respectif qui n'est pas concerné, et/ou grâce au fait que l'unité de surveillance (34) communique avec la commande d'entraînement (14) uniquement dans des intervalles temporels dans lesquels il ne se produit aucun échange de données entre la commande d'entraînement (14) et l'unité de détection (12).

14. Utilisation d'une unité de surveillance (34) selon l'une des revendications 1 à 8 pour le rééquipement d'un système d'entraînement (10) comprenant une commande d'entraînement (14) d'un entraînement (12) et une unité de détection (22), de l'entraînement (12), reliée à la commande d'entraînement (14) via un canal de process (28) pour des données de process et via un canal de paramètres (30) pour des données de commande, dans un système d'entraînement (10) à l'épreuve des erreurs, comprenant une unité de détection (22) à l'épreuve des erreurs, en particulier un système d'entraînement de sécurité (10) selon la revendication 9 ou 10, dans laquelle une unité de surveillance (34) selon l'une des revendications 1 à 8 est branchée au canal de process (28) pour la réception de données de process de l'unité de détection (22) et au canal de paramètres (30) pour l'échange de données avec la commande d'entraînement (14).
